Europäisches Patentamt

European Patent Office

Office européen des brevets

(19)

(11) **EP 0 947 939 A2**

(12) # EUROPEAN PATENT APPLICATION

(43) Date of publication:
06.10.1999 Bulletin 1999/40

(51) Int. Cl.[6]: **G06F 17/60**

(21) Application number: 98108703.4

(22) Date of filing: 13.05.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 31.03.1998 EP 98105837

(71) Applicant:
**INTERNATIONAL BUSINESS MACHINES CORPORATION**
**Armonk, NY 10504 (US)**

(72) Inventor: **Stolze, Markus**
**8134 Adilwil (CH)**

(74) Representative:
**Klett, Peter Michael**
**International Business Machines Corporation,**
**Säumerstrasse 4**
**8803 Rüschlikon (CH)**

(54) **Item-choice-assisting method**

(57)   A method for displaying a selection of items, preferrably for assisting the choice of at least one item out of the selection of said items is proposed. The selection is displayed in form of a table which contains item properties and for each of the items and for each of the item properties contains item property support information which contains a grade to which the item supports the item property. The grade is an expression for if and/or under which condition the item has the item property. At least one preference attribute is assignable to at least one selected item property. Subsequently the table is redisplayed under use of the preference attribute which means that in the redisplayed table for the items differing in the grade for the selected item property a respective different grade information is reflected, preferrably in form of a different background color and/or brightness and/or pattern and/or a different font property, such as font size and/or line width.

Fig.2

EP 0 947 939 A2

## Description

TECHNICAL FIELD

The present invention relates to a method for displaying a selection of items, also called products, preferrably for assisting the choice of at least one item out of the selection of items. More particularly, the invention relates to a method for evaluating items according to their item properties and attributes assignable to these items. The items can be ranked according to their overall performance which is calculated from individual values of the support of the item properties.

BACKGROUND OF THE INVENTION

In US 5550746, a method and apparatus for storing and selectively retrieving product data by correlating customer selection criteria with optimum product designs based on embedded expert judgements is disclosed. A machine and method are provided for selecting product or service design, such as a social expression product. The machine and method each stores a plurality of product or service designs and a plurality of descriptors for each of the plurality of product or service designs, each of the descriptors representing an application scale; stores an expert-predetermined optimum applicability value for each combination of the application scales and the product or service designs; presents, to a customer, selection criteria options for one or more application scales; stores customer preference values for one or more application scales used for describing the product/service design, the customer preference values to be predetermined by expert judgment and assigned to application scales where such values correspond to the selection criteria options chosen by the customer; quantitatively correlates, by means of a correlation algorithm, each of the customer preference values with corresponding expert-predetermined optimum applicability values to calculate an average suitability rating for each of the product or service designs based on the customer-chosen selection criteria options; and displays for the customer a group of identified product or service designs based on the average suitability ratings for those identified product or service designs. In the case of a product, the apparatus and method solicit the customer to select one of the identified product designs, verify the selection and possibly modify the selected product design. The selected or modified product design may then be dispensed to the customer.

US 5615342 is directed to an electronic proposal preparation system. An electronic system for creating customized product proposals stores a plurality of pictures and text segments to be used as building blocks in creating the proposal. The pictures may include various products, environments in which the products may be used, and available product options. The text segments may include textual descriptions of the product, environments in which the product may be used, and its performance specifications. The system queries a user to determine a customer's needs and interests. Based upon the answers to the queries, the system selects the appropriate picture and text building blocks to fill in proposal templates. The system can print the completed proposal templates to provide the user with a customized, printed proposal that describes features and benefits of a product, in a particular environment, that are of interest to the customer who is to receive the proposal.

US 4984155 concerns an order entry system having catalog assistance. In a system for enabling a customer to operate a data terminal for placing an order for goods or services from a supplier, the data terminal displays information about the goods or services being ordered to complete, correct or update information available from the supplier's catalog. The system has a product file including records having a unique product code for each product, and a catalog number index for indexing the product records. A catalog number supplied by the customer is recognized as invalid when it is not found in the catalog number index. To provide catalog assistance, the customer is permitted to enter an invalid catalog number that is used as a key to random access the product file and display the product code, catalog number and other information such as product availability, product description or product change history for each of a series of products having catalog numbers similar to the catalog number entered by the customer. The customer may then select a desired catalog number or product code on the display for use in the line item of an order without typing in the correct catalog number or product code. In a multiprocessing system, a product file buffer is used for each customer to facilitate paging of the catalog assistance information.

The article "Electronic Sales Assistance" by M. Rosewitz and Ulf J. Timm, available on the Internet under http://www.forwiss.uni-erlangen.de/~rosewitz/chi98/paper.htm, describes a product choice-assisting approach where fuzzy multi-criteria analysis is used. Due to the difference in handling attributes, the concept distinguishes between metric and nominal attributes. For metric attributes a range can be defined as an interval, for nominal attributes each single value has to be specified. With this knowledge, the system can let a customer choose a product category, select the attributes he is interested in and type in or select the wanted values. The first step in dealing with a nominal attribute is to rate a product with the required value as fully suitable (1.0) and otherwise not suitable (0.0). For many nominal attributes, where the values are comparable by quality, size etc., this procedure can be enhanced by assigning a number of comparison to each attribute value. Then the described method for metric attributes can be applied. When all single ratings are calculated, the system has to combine these values to a total rating. Because all values are in the interval [0;1] the use of a fuzzy AND-operator (e.g., product or average) is regarded as reasonable. With a given requirements profile of a customer this procedure results in a list of all available products with their rating values. These are diplayed to the customer which could be in form of a ranking with descending rating values. So, even if no product qualifies as fully suitable to the requirements profile, at least the best qualified product is offered to the customer in a prominent position at the top of the list of all available products.

Further domains providing information on product choice assisting are http://www.persona Logic.com and http://www.logicaldecisions.com/structur.htm.

OBJECT AND ADVANTAGES OF THE INVENTION

It is an object of the invention to provide a method for displaying a selection of items which facilitates the choice of at least one item out of this selection. The provision of the possibility to assign one or more significance attributes in form of a preference attribute to a selected item property which leads to a redisplayed selection which makes use of the preference attribute in that in the redisplayed table for items differing in their support grade for the selected item property, a respective different grade information is reflected, e.g. in form of a different background color, has the advantage that a more sophisticated and fine-graded classification or ranking of items is achievable. The invention can hence also be seen as a method of analysing items according to their item properties under incorporation of user-defined constraints or significance attributes. The invention can also be seen as a method of classification of items with different item properties.

When several significance attributes are assigned to the item properties, the problem is solved that the differing support distribution of different items is mapped into a total grade of the items. The total grade can be determined according to an algorithm. Such algorithm can differ in the way the various grades are weighted. It is possible that a default weight, which may be evenly distributed among different item properties, is altered upon assignment of a preference attribute, such that the weight of the selected item property is increased.

The subdivisionability of an item property into further item properties, also called subitem properties, offers the possibility to design the table as clear and simultaneously as detailed as desired. Item properties which the user regards as less interesting can be left undivided, while those item properties which are of greater concern can be watched in more detail and thereby also treated preciser by having the possibility to assign significance attributes to these subitem properties resulting in a preciser grade information. Also here, the assignment of a preference attribute can be used to increase the respective weight of the selected item property. The increased weight leads to a higher influence of the selected item property on the total grade on the next higher property level which incorporates several item properties below this level. The increase in weight may even be controllable by the user who performs the assignment. An item property may even be deselected from being displayed.

The table gets compacter and still offers a more detailed information content when different grades and/or conditions of subordered item properties of a common item property are displayed as part of the item property support information for the same item property, preferrably in a common table field with a separating graphical element in between. Particularly when a user has watched the table in the mode when the subitem properties are displayed, and afterwards switches back to the mode when the subitem properties are hidden, he can more easily remember the full information content by the abbreviated form in the respective field of the superordinated item property.

When the grade information is reflected in the table for each item in a field assigned to the item and/or in a field assigned to the selected item property for that grade, the grade due to its place can be directly recognized by a customer as to which item it belongs. Particularly the reflection of the grade information of subproperties in the table field of the thereto belonging superordinated item property provides a propagation of the grade information of the subproperties upwards the item property tree, whereby a calculating algorithm can be used which combines the grade information of item subproperties of the same level to a total grade information which is reflected for the superordinated item property. This algorithm can use a weighting of the various pieces of grade information for the determination of the total grade information. This weighting can be influenced in that the preference attribute is used to increase the weight of the according selected item property, following the fact that the act of assigning the preference attribute is an expression of importance for that selected item property which hence is expressed accordingly in the total grade information.

An even better-personalized influence can be achieved by offering the possibility to vary the weight directly. By this, a user can not only express one level of personal perference but even a fine grading of perference. A default weighting and default weight increase in the case of an assignment of a preference attribute facilitates the use of the method in that a user without will to introduce his weights, can immediately use the method.

The table can even be more customized when an item is deselectable from the displayed selection, preferrably via a deselection request, preferrably arriving as an input via an input device, such as a keyboard, a joystick, a mouse, a lightpen etc.. Then, items of no interest can be deselected. Thereby personal and private criteria of deselection can be taken into account. Also it can prove useful to deselect an item property from being displayed, e.g. because the person for any reason considers the display of this item property as obsolete.

Additionally it is possible to define as significance attribute also a exclusion attribute which means that in the redisplayed table the item, whose grade for the selected item property to which the exclusion attribute is assigned, is equal to that the item does not support the selected item property, is not displayed. This is the definition of a hard constraint which leads to the hiding of items that do not support selected item properties. The user can combine such hard constraints with soft constraints, i.e. the preference attributes, and thereby again customize his selection.

The significance attribute can be made revokable such that the table can be redisplayed without use of this significance attribute. By this, a user can try different configurations of significance attributes to determine his final set of significance attributes which he desires and probably regards as most meaningful.

The item properties can be derived from item descriptions which are provided in a common format containing at least a name for each item, item properties, and eventually conditions. This derivatization can be automatized due to a common format of the information. In this information all supported item properties can be included and non-supported item properties need not be mentioned. An automatic table generation can take place which generates a matrix of all items versus all item properties and which also automatically generates the item property support information based on the item descriptions.

When the items are sorted along their total grade, the method becomes a sorting method for items taking into account the preference attributes.

Furthermore it can be of high value when an automatic grading of conditions according to desirable order, e.g. lowest price, highest coverage, longest term etc. takes place. Since it can be imagined that e.g. for the comparison of different items, one of which is planned to be purchased, the user will always choose the item among items with equal grade which is cheaper. Hence a subgrading of grade 2, which is a positive support of an item property bound to at least one condition, into subgrades with different conditions for the same item property is possible, taking into account predetermined ranking orders set along an anticipated human choice behaviour, like choosing always the lowest price, the shortest delivery time, the longest guaranty time, the lowest energy consumption, the broadest application field a.s.o. For automatic grading, the automatism needs to recognize the condition type in order to determine the direction of preference. Another possibility is that a person defines the direction of preference and gives this direction as input to the automatism. This direction can then be stored to be used for future cases, which preservation of direction of preference provides a sort of learning mechanism for the automatism. For facilitating the recognition of conditions, the conditions may contain keywoeds, which may be standardized, such as "prize" or "payout limit" a.s.o.

A symbol for subdivisionability is a help for the user to easily know whether an item property is subdividable or not. The symbol could be used as a mark for an input device, such as a mouse-pointer or a lightpen for the user to enter his subdivision request. The subdivisionability sign can change according to the state of the display, i.e. show that the item property is subdivisionable upon the next input or that the subdivided display mode of the item property can be changed into the non-subdivided display mode.

When a selection menu is displayed for the choice of an exclusion attribute and a preference attribute, the user easily gets an idea of the choice he has as to which operation he can do. This menu can be made context-sensitive such that e.g. for an item which has already an assigned preference attribute, instead of the sign for "assign preference attribute" a sign for "withdraw preference attribute" is displayed. Other selection menus are also possible, particularly for altering weights or other parameters.

The method can be optimally implemented in form of a computer program which provides for the readout of stored information data containing the information about which item property is supported by which item in which way and for the display of the information in form of the table and which provides for reading of input which contains information about to which selected item property a person has assigned a significance attribute and which further provides for the redisplay of displayed information such that the significance attribute is utilised.

The computerized method can be run on a computer equipment which has the necessary information stored at least temporarily in storage means and which provides means for communicating the assignment of the significance attributes to the means for calculating the support grade.

SUMMARY OF THE INVENTION

In a table, various items are displayed according to their item properties. In the table fields, information is contained which in principle tells whether an item, also called product, has an item property or not. According to the invention, as input a sort of soft constraint can be defined for selected item properties. This constraint is not used for deselecting items from the displayed selection but to identify primarily those items which do not satisfy the constraint, i.e. which do not support the item property to which the constraint has been assigned. The identification of the items is done in that the respective item receives a grade information which is reflected in the table. The lowest grade is here the fact that an item does not support a certain item property. The highest grade is the fact that an item supports a certain item property. The invention shows its full potential when several such constraints are assigned. Then the sum of the grades is decisive for the classification of the item, which sum needs not be an algebraic sum but can be the result of a calculation according to any predetermined scheme, e.g. incorporating a weight of the respective item property with respect to other item properties.

A preferred method of ranking the items along their different grades is to compare all grades of item properties in the same level and to set the grade of the selected item property into relation to the grades of the item properties in the same level. The same level means here all item properties which have a common superordinated item property, i.e. which are direct subitem properties of only one item property. The grade of the selected item property is preferrably multiplied with a factor smaller than 1 and then added to the grades of the other item properties of the same level. By the multiplication, a weighting is achieved which gives the selected item property a bigger significance in the resulting total grade of the superordinated item property. Another way is to assign the opposite value ranking to the grades, i.e. for example grade 1 gets a value of 3, grade 2 a value of 2 and grade 3 a value of 1. Then the value of the selected item property can be multiplied by a factor bigger than 1, such that again the grade of the selected item property has a bigger influence on the total grade than item properties of the same level. Generally, the grade of the selected item property is chosen to be of bigger influence on the total grade at the next higher level, i.e. the superordinated item property, than the item properties on the same level. Therefor any arithmetic weight amplification can be chosen, e.g. also adding a predetermined value. The increase of influence can also be chosen according to the number of item properties in the same level. For instance can the increase be chosen indirectly proportional to this number.

Even more detailed information can be contained which tells under which condition an item has an item property. This condition can be a additional fee to be paid or a limit, etc. In order to be able to classify also items with such conditions, a general grade 2 can be defined which lies between the grade 1 and the grade 3. This grade can then be subgrouped into subgrades which have one single condition type. Thereby conditions which comprise other conditions can be included, e.g. a prize of 200 units comprises a prize of 100 units.

Another influence on the algorithm for the item evaluation can be the possibility to adjust or determine the weights with which the item properties are entering the algorithm.

DESCRIPTION OF THE DRAWINGS

Examples of the invention are depicted in the drawings and described in detail below by way of example. It is shown in

Fig. 1 a table with items, item properties and grade information with a first preference attribute assigned to a selected item property,

Fig. 2 the table of fig.1 with a second preference attribute assigned to a selected item property,

Fig. 3 a table with adjustable weights,

Fig. 4 the table of fig. 3 with a selected item property with increased weight.

All the figures are for sake of clarity not shown in real dimensions, nor are the relations between the dimensions shown in a realistic scale.

DETAILED DESCRIPTION OF THE INVENTION

In the following, the various exemplary embodiments of the invention are described.

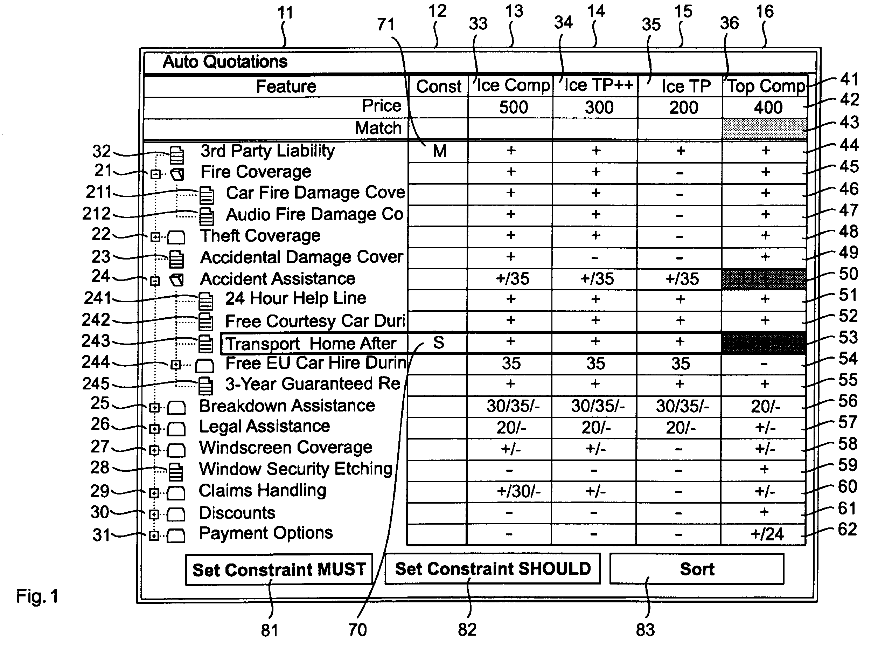

In figure 1, a table is shown which comprises six columns 11-16, wherein a first column 11 is dedicated to a presentation of item properties 21-32 for four different items. The table further comprises several rows 41-62. The items each are represented by an item name 33-36 given in the first row 41, namely in a third column 13 the item name "Ice Comp" for a first item, in a fourth column 14 the item name "Ice TP++" for a second item, in a fifth column 15 the item name "Ice TP" for a third item and in a sixth column 16 the item name "Top Comp" for a fourth item. The items to be compared with this table are here car insurance items.

The second row 42 comprises four each of the items an item price. This is here seen as the item characteristic of central interest. Following a natural desire, a customer selects the item which at best performance has the lowest price.

To each one of the item properties 21 - 32 is assigned one of the rows 45-62. Some of the item properties 20-31 are subdividable into further item properties 211, 212, 241-245, herein also referred to as item subitem properties. Thereby a sort of item property hierarchy in form of a tree is formed. This tree contains item properties which form nodes towards their subordinated subitem properties and item properties which are not subdividable and hence form terminal item properties.

A first item property 21 is herein the fire coverage of a car insurance item, contained in the row 45. The according subitem properties 211, 212 are a car fire damage coverage and an audio fire coverage, i.e. the reimbursement of a audio device damaged by a fire. The two subitem properties 211, 212 are arranged in the two rows 46, 47 of the table below the assigned item property 21 "fire coverage". A minus-symbol near the first item property indicates that this item property is subdividable into subitem properties and that these subitem properties are actually shown.

A second item property 22 concerns theft coverage which is indicated by a plus-symbol in its row 48 as subdivideable into subitem properties whereby the respective subitem properties are not diplayed in the table.

A third item property 23 is accidental damage coverage, hence coverage for selfcaused damages, which item property 23 is not subdividable into subitem properties and is displayed in its row 49. A subdivisionability symbol is hence not displayed.

A fourth item property 24 in its row 50 concerns accident assistance which has as subitem properties 241-245 in the respective rows 51-55 a 24-hour helpline, a free courtesy car during repair, transport home after an accident, a free EU-car-hire during repair and a 3-year guarantueed repair period. The subitem property 244 "free EU car hire during repair" is again subdivideable into a further item property, herein also referred to as item subsubitem property 244.

A fifth item property 25 is breakdown assistance in its row 56, a sixth item property 26 in its row 57 is legal assistance, a seventh item property 27 in its row 58 is windscreen coverage, which is the cost reimbursement of damaged windscreens without need of proof of 3rd party damage cause and an eigthth item property 28 in its row 59 is a cost-free window security etching.

The ninth item property 29 in its row 61 concerns claims-handling, hence the possibility to choose between various claim-handling procedures and a tenth item property 30 in its row 61 concerns discounts or fee reductions while an eleventh item property 31 in its row 62 is the possibility to choose among various payment options.

An eleventh item property 32 in its row 44 concerns a coverage of 3rd party liablility, hence liability of an accident causer towards third parties who have suffered damage from that accident.

Apart from the eighth item property 28, the eleventh item property 32 and the third item property 23 all other item properties 21, 22, 24, 25, 26, 27, 29, 30, 31 are subdivideable into subitem properties.

At the crosspoints between the rows 44-62 of the item properties 21-32, respectively subitem properties 211, 212, 241-245, and the columns 13-16 of the items, the table comprises item property support fields which contain item property support information for the respective item and the respective item property.

The item property support information is a piece of information which tells if and/or to which extent the item supports the respective item property. Herein a symbolic depiction is chosen in which a plus-sign indicates that the item property is fully supported, whereas a minus-sign indicates that the item property is not at all supported. Between these two support extrema, a number of possibilities exists in the way the item property is supportable. With other words, a support may be given but only under certain conditions, such as up to a certain time limit, within country borders or depending on age.

A number in a table field indicates here that the respective item property is available but is coupled to a price augmentation denoted by the number which hence is the additional price to pay to obtain the support for the item property. Another possibility is a number preceded by a corresponding symbol, letter or sign, e.g. an L-sign which indicates that the number represents a limit of a coverage, e.g. a maximum payable cost refund. Any other display of such detailed support information is possible, e.g. to display age limits, coverage limits etc..

For the subitem properties of the fourth item property 24 which concerns accident assistance, various different item property support information is present in the table. This item property support information is reflected also in the field of the superordinate fourth item property 24 in that the different item property support information is all simultaneously represented in that field, separated by a separating symbol which here is a backslash. By this, the item property support information of the subitem properties 241-245 is concentrated in sort of an overview in the field of the item property 24, such that even when the item subitem properties 241-245 are not shown in the table, the item property support information of the item subitem properties 241-245 can nonetheless be seen.

The second column 12 is dedicated to the display of significance attributes. Herein, two different significance attributes are choosable, namely an exclusion attribute, also referred to as a must-constraint and a preference attribute also referred to as a should-constraint.

A first significance attribute 70 is assigned to a first selected item property which here is the subitem property 243 concerning transport home after accident. This assignment is indicated in the field at the crosspoint of the second column 12 and the row 53 with a preference attribute symbol, herein a "S" like "Should", since the first significance attribute 70 is a preference attribute or should-constraint.

A second significance attribute 71 is assigned to a second selected item property which here is the eleventh item property 32. This is indicated with a preference attribute symbol in the field at the crosspoint of the second column 12 and the row 44, herein a "M" since the second significance attribute 71 is an exclusion attribute or must-constraint.

Herein the item support information which tells that the respective item property is supported by the respective item is defined as a grade 1, while the contrary item property support information is defined as a grade 3. A grade 2 is defined as an item property support information which comprises a condition. Such a condition can be e.g. an additional fee to be paid or a certain limit or any other restriction which is connected to the support of the respective item property. The third row 43 is dedicated to the display of grade information of the items and is herein called "match", since it reflects a match grade between the existing item properties and the desired item properties.

The item property support information of the fourth item for the first selected item property 243 has a grade 3 which is reflected in the table in that the respective table field is displayed with a different backgrund shading than the table fields of the other items which support the first selected item property 243 with a different grade, here grade 1. Hence, the first significance attribute 70 is used for a modification of the table appearance in that the table is redisplayed under use of the first significance attribute 70, whereby the first significance attribute 70 here is a preference attribute. In the redisplayed table for the items differing in the grade for the first selected item property 243 a respective different grade information is reflected. Alternatively, the reflection may be achieved in form of a different background color, brightness, pattern, font item property, such as font size or line width, bar length or even a number. Also several of these measures can be used simultaneously.

The rule is used here that the background shading is the darker, the higher the grade number is. Grade 3 is hence assigned to the darkest shading, grade 1 to the brightest and grade 2 in between.

The grade infomation not only appears in the corresponding field of the selected item property 243 but also in the field at the crosspoint between the row of the superordinate item property 24 and the column of the same item. This means that the grade information is propagated upwards in the item property hierarchy. And even, a level higher in the tree, at the highest level, again grade information appears, namely in the third row 43, which is named with "match" and shall give an overall grade information for the items. This means that the grade information is again propagated upwards in the item property hierarchy.

Different schemes for the reflection of the grade information in that upwards positioned field are possible. Herein, the fact that the first selected item property 70 is not supported by the fourth item is combined with the fact that this item nevertheless offers support for other item properties which are subordinated under the same superordinate item property. Only one other subitem property of the same level, namely the subitem property 244 "free EU car hire during repair", has also an item property support information with grade 3. Here, the subitem property 241 "24-hour helpline", the subitem property 242 "free courtesy car during repair" and the subitem property 245 "3-year guarantueed repairs" all have an item property support information with grade 1. This means that although the first selected item subitem property 70 is not supported, the item supports three other subitem properties of the same superordinate item property 24. The grade information of the first selected subitem property 70 which grade information is a shading of the background, is therefore weighted against the three grade-1 subitem properties 241, 242, 245 and the one grade-3 subitem property 244, such that the grade information which is reflected in the field at the crosspoint between the row of the superordinate item property 24 and the column of the same item is different from the shading in the corresponding field of the subordinate item property 243, in that the shading is brighter.

For the weighting of the different item properties within a common level, an algorithm can be used which takes into account the above considerations. Generally, for any item $I_x$ and any item property $G_i$ and for its item property support information a rule can be applied. The evaluation for the item property hierarchy is then computed as follows:

Rule 1: If the item property $P_i$ of an item $I_x$ is non-terminal then the evaluation value Eval($P_i$, $I_x$) of that item property $P_i$ is the weighted sum of all subitem property evaluation values Eval($P_j$, $I_x$):

$$\text{Eval}(P_i, I_x) = \Sigma_{j=k,l} (\text{Eval}(P_j, I_x)*\text{Weight}(P_j)) \text{ with } \{P_k-P_l\} = \text{Sub-item property-set } (P_i) \text{ and } \Sigma_{j=k,l} (\text{Weight}(P_j)) = 1$$

This means that each subitem property of a common superordinated item property has a weight Weight ($P_j$) which is multiplied by an evaluation value Eval ($P_j$, $I_x$). The evaluation value Eval($P_j$, $I_x$) is derived from the grade information, or more generally from the item property support information of the item subitem property, which is defined by rule 2.

Rule 2: If the item property $P_i$ is a terminal item property, i.e. not further subdivideable, then the evaluation value Eval($P_i$, $I_x$) is computed trough a scoring function or a scoring rule that investigates the description of the current item, the conditions and the price associated with the item property, and returns an evaluation value between 0 and 100. 0 is then used for a negative support information, hence no support and 100 is used for full support. Values inbetween can be used for grade 2.

Herein, a normalized sum of the weights Weight ($P_j$) is used, which is 1. In combination with rule 1, this implies that at for any $item_x$ and item property $P_i$ the valid range for the evaluation value is $Eval(P_i, item_x) \in [0, 100]$.

The scoring function is the way the grades of several subitem properties are combined to obtain the grade of the superordinated item property.

The scoring rule is the algorithm which determines the grade according to the item property support. In this example, the grade 1 is given for items supporting the selected item property, grade 2 for items that do support the item property in connection with a certain condition and grade 3 is given for items that do not support the selected item property. Since a variety of conditions is possible, a subgrading can be envisaged which defines subgrades of grade 2 depending on the condition. This subgrading can group comparable conditions and provide for a ranking within that group. E.g. if the condition is a maximum payout limit of an insurance item, a ranking makes sense that gives the highest subgrade to the item with the highest limit and the lowest subgrade to the item with the lowest limit. Herein an automatism can be utilized which automatically determines the direction of grading by implicit system knowledge which recognizes the type of condition and takes into account regular human preference behaviour.

The rule is to be enlighted with the following general example: Given be a item property hierarchy as follows:

```
P1
!-----P11
!        !-----P111
!        !-----P112
!-----P12
!-----P13
         !-----P131
         !-----P132
         !-----P133
```

Also given be the following evaluation values $Eval(P_i, I_x)$ of terminal item properties:

Eval(P111, item$_1$) = 90
Eval(P112, item$_1$) = 70
Eval(P12, item$_1$) = 60
Eval(P131, item$_1$) = 40
Eval(P132, item$_1$) = 50
Eval(P133, item$_1$) = 60

In addition, the following weights Weight $(P_j)$ might be given:

Weight(P111) = 1/2
Weight(P112) = 1/2
Weight(P12) = 2/5
Weight(P131) = 5/10
Weight(P132) = 3/10
Weight(P133) = 2/10
Weight(P11) = 1/5
Weight(P13) = 2/5

This results in the following computed evaluation values $Eval(P_i, I_x)$:

Eval(P11) = (Eval (P111)*Weight(P111))+ (Eval (P112)*Weight(P112))
= (90*1/2)+(70*1/2) = 45 +35 = 80


Eval(P13) = (Eval (P131)*Weight(P131)) + (Eval (P132)*Weight(P132)) + (Eval (P133)*Weight(P133)))
= (40*5/10)+(50*3/10)+(60*2/10) = 20+15+12 = 47

Eval(P1) = (Eval (P11)*Weight(P11)) + (Eval (P12)*Weight(P12)) + (Eval (P13)*Weight(P13)))
= ( 80 * 2/5 ) + (60*1/5 )( 47*2/5) = 32 + 12 + 18.8 = 62.8

Putting a should-constraint on an item property leads to an adjustment of the weights in the item property tree in such a way that the weight of the item property to which the constraint is assigned, is increased while the weights of the other item properties below the same superordinated item property are decreased, such superordinated item property keeps its weight. The grade to which the weight is changed upon assignment of a should-constraint can either be given automatically or be made choosable. The automatic weight adjustment could e.g. be chosen as a fixed weight unit, depending on the hierarchy level. Another possibility is to offer several levels of preference attributes which then lead to different weight changes. This can be achieved by offering the possibility to assign either different should-constraints with different preference values, such as "important", "not so important", "very important", or by making possible to assign the should constraint several times to the same item property, such that each time, the weight is increased accordingly.

Given the algorithm for computing the item property evaluation values, the intensity of the marking of the table field is determined as follows:

$$I(I_i, P_j) = (Weight(P_j) * (100 - Eval(P_j, I_i)))$$

with Weight$(P_j)$ = $\Sigma$(Weight$(P_k)$ | $P_k \in$ Subitem properties$(P_j)$) .

This means that the marking of the table field, which is the way the grade information is reflected in the table, is determined by the maximum evaluation value the item property can have for a given weight. Exemplarily, if a weight of an item subitem property is 0.2, the maximum evaluation value for the superordinated item property can be 20. This is also the upper limit of item property support information for this item property, hence the maximum shading, bar length or whatever reflection type is chosen.

Additionally, the grade information is reflected as shading in the third row 43. Here again the weighting of the overall item support information is used to obtain the grade information which is displayed in the field at the crosspoint between the third row and the column of the same item. Again, all item properties which are of a common level are used to summarize the overall performance of the item in relation to the set of selected item properties with their significance attributes. Because the fourth item has in total six grade-1, and 5 mixed-grade item properties in addition to the first selected item property 53, the shading in the field at the crosspoint between the third row and the column of the same item is again brighter.

The second significance attribute 71 is also used for the redisplayed table in that any item that has an item property support information with grade 3 is suspended from being displayed. This becomes apparent in that the grade information for the eleventh item property 32 in this example only contains grade information of grade 1. The second significance attribute 71 is hence a constraint which effects a selection of items which is restricted to those items which support the item property, hence which have as item property support information a grade 1 or 2. Items with grade 3 are suppressed from being displayed.

The effected selection of the items in the table is hence determined by the assignment of the signficance attributes. The items are displayed according to the match with the significance attributes which reflect selection conditions.

The shown display is a screen capture of the display effected by a computer program that performs the described method. The displayed information is derived from stored information comprising the items with their item properties, from a mechanism which builds up the hierarchical tree of the item properties and from an algorithm performed by the program which determines the grades of support. Furthermore an algorithm is implemented which is dedicated to the reception and processing of the constraints 70, 71 and which effects the redisplay of the information under use of the constraints. Another part of the program controls the input of the constraints which here provides for three input fields 81, 82, 83 which together form a menu for entering the constraints via a mouseclick. A first input field 81 of the input fields gives the opportunity to set a must-constraint after one of the item properties has been selected by a first mouseclick. A second input field 82 is arranged for offering the setting of a should-constraint. A third input field 83 provides for a sorting option. Selecting an item property or the price or the overall match e.g. by mouseclick, and afterwards clicking on the sort-field 83, effects a sorting along the selected property, price or match. Additionally, a sorting direction option can be included. The menu can contain other options like resetting of constraints 70, 71, multiplicating of constraints, deselecting items or properties from being displayed, tools for rearranging and managing the tree structure and hierarchy of the item properties, display options, like color, shading, fonts etc., size, storing functions for a view with assigned significance attributes, ordering options for online ordering of items, an interface towards an agent who provides the program with the item information, e.g. by searching online databases or the Internet a.s.o..

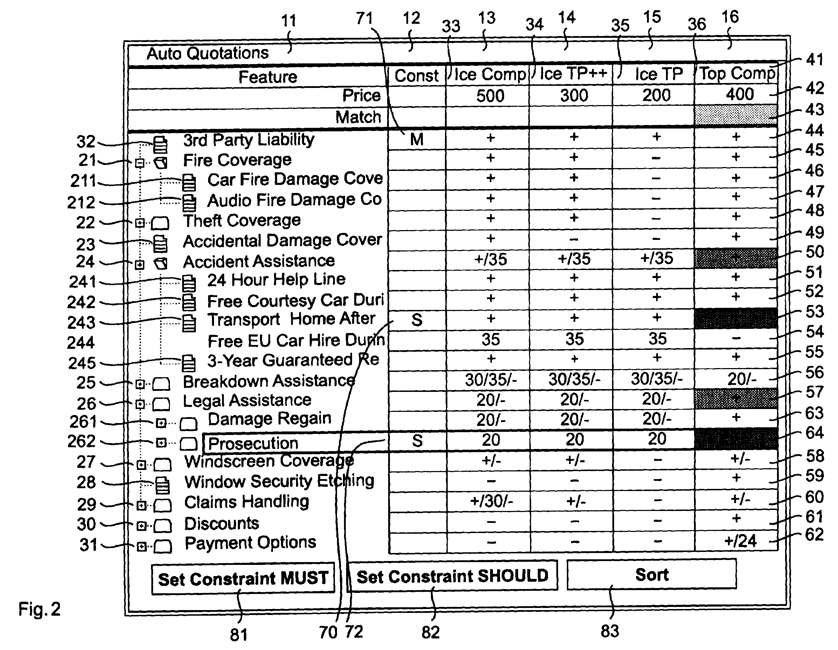

In figure 2 the table of fig. 1 is depicted with the following variations:

The sixth item property 26 is displayed in more detail in that its two subitem properties "damage regain" 261 and "prosecution" 262 are displayed in respective rows 63, 64.

A third significance attribute 72 is assigned to a third selected item property, which is the subitem property 261 "prosecution". The third significance attribute 72 is again a should-constraint, indicated by an "S" in the second row 12. Whereas the fourth item does not support this selected item property 261, the other three items support this item property with a grade 2. The condition under which the third selected item property is supported by the three items is an additional fee of 20 currency units. The additional fee is here deemed to be accepted by the person who wants to select an item with the third selected item property and automatically added to the price which is displayed in the second row 42. Thereby, the item is deemed to support the third selected item property 72 but at a higher price. The grade infomation is similar to a grade 1.

Alternatively, the higher price could not be automatically be deemed to be accepted and be e.g. displayed in the third row 43 such that it is recognisable at which additional costs the item supports this selected item property. Adding up of several of these addiitional fees for a plurality of selected item properties, would then lead to a total fee for all selected item properties.

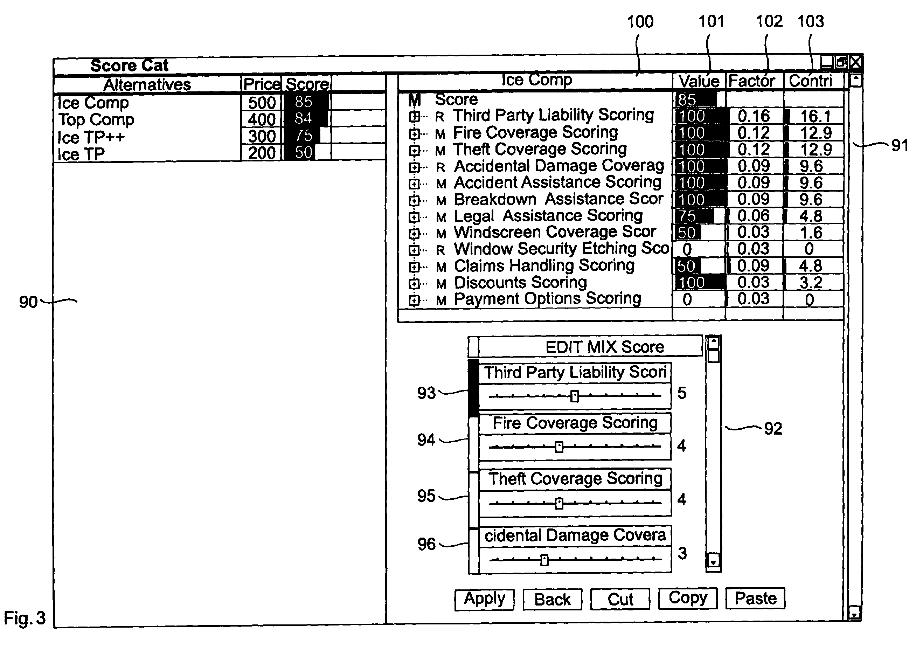

Figure 3 shows an alternative view of the item evaluation interface described before. Here items are listed in a vertical list in a left pane or table 90 and the item property hierarchy is displayed in a right pane or table 91. The item property support information is here displayed in form of item property support values in a value column 101. They are displayed on the right pane 91 only for a selected item which selection can e.g. be done via an input device, such as a mousepointer. In this example, the first item "Ice Comp" is selected, which is depicted in a item name column 100.

The left table 90 displays in three columns the name, price and total evaluation value, referred to also as "score" of each item. It also contains a fourth column in which will be displayed the score of the item property selected in the right table for each of the items in the left table if an item property is selected. Numeric information is displayed here twofold coded, on one hand as digits and on the other hand as a bar in each table field, the length of the bar being proportional to the numeric information. The left table can be sorted according to the values of each column by clicking on the column header. The column that is currently used for sorting the item list is displayed in slightly lighter color than it's base color, herein the column "score".

The right table 91 displays the item property tree structure, as it is displayed in figs. 1 and 2. For each item property it contains four columns 100-103, holding the name, the score Eval ($P_i$), the weight, also called "factor" Weight ($P_i$) and a contribution value "Contrib", i.e. Eval ($P_i$)*Weight ($P_i$). Like the table on the left, this table has also the numeric information twofold displayed, namely as digits and bars.

This alternative view presents a more detailed, numeric evaluation to the user that reveals more of the underlying evaluation computation mechanism. The view also allows a more fine-grained manipulation of the evaluation function. The manipulations of the evaluation function can be done in a control panel 92 on the lower right of the view. Weights of non-terminal item properties can be manipulated numerically through displayed sliders on each level.

For item properties the evaluation rule can be modified. The evaluation rule can have various forms. It can e.g. consist of several comparison statements which compare an item property with a certain predetermined value or expression of that item property and provide for different evaluation values depending on the comparison result. Another possibility is the application of a mathematical formula which directly derives the evaluation value from the item property, which method is particularly handsome if the item property or a condition attached to it consists of or contains a numerical value that can be directly used for the determination of the grade of support, respectively the evaluation value.

Even the whole item property hierarchy can be modified by moving, copying, or deleting parts of the hierarchy or inserting new terminal and non-terminal item properties. Therefor various input fields are depicted which are denoted with "Cut", "Copy", "Paste".

A database that can be used to feed the described table contains the necessary information, e.g.

```
(Offer "Ice Comp" 500

    (Third-Party-Liability = yes)
    (Car-Fire-Damage-Coverage = yes)
    (Audio-Fire-Damage-Coverage = yes)
    (Car-Theft-Coverage = yes)
    (Audio-Theft-Coverage = yes)
    (Accidental-Damage-Coverage = yes)
    (Trentyfour-Hour-Help-Line = yes)
    (Free-Courtesy-Car-During-Rep. = yes)
    (Transport-Home-After-Accident = yes)
    (Free-EU-Car-Hire-During-Repair-up-to-10-days = yes)
```

```
        (Three-Year-Guaranteed-Repairs = yes)
        (Domestic-Assistance = yes)
        (EU-Assistance = yes)
        (Damage-Regain-up-to-five-millinon = yes)
        (Damage-Regain-first-year-free = no)
        (Prosecution-up-to-tenthousand = yes)
        (Windscreen-replacement = no)
        (Windscreen-repairs = yes)
        (Window-Security-Etching = no)
        (No-Claims-Discount = yes)
        (No-Blame-No-Penalty = no)
        (Claims-Excess = 100)
        (Second-Car-first-Year-Discount = yes)
        (Payment-Monthly-by-CreditCard = no)
        (Payment-Annually-by-CreditCard = no))


(MixScoring "Score"

        (MixElement 5 "Third Party Liability Scoring")
        (MixElement 4 "Fire Coverage Scoring")
        (MixElement 4 "Theft Coverage Scoring")
        (MixElement 3 "Accidental Damage Coverage Scoring")
        (MixElement 3 "Accident Assistance Scoring")
        (MixElement 3 "Breakdown Assistance Scoring")
        (MixElement 2 "Legal Assistance Scoring")
        (MixElement 1 "Windscreen Coverage Scoring")
        (MixElement 1 "Window Security Etching Scoring")
        (MixElement 3 "Claims Handling Scoring")
        (MixElement 1 "Discounts Scoring")
        (MixElement 1 "Payment Options Scoring"))


(MixScoring "Accident Assistance Scoring"

        (MixElement 5 "Trentyfour Hour Help-Line Scoring")
        (MixElement 5 "Free Courtesy Car During Repair Scoring")
        (MixElement 5 "Transport Home After Accident Scoring")
        (MixElement 5 "Free EU Car Hire Scoring")
        (MixElement 5 "Three Year Guaranteed Repairs Scoring"))


(RuleScoring "Trentyfour Hour Help-Line Scoring"

        0
        (ScoringRule 100 (= (val Trentyfour-Hour-Help-Line ) yes)))


(RuleScoring "Free Courtesy Car During Repair Scoring"

        0
        (ScoringRule 100 (= (val Free-Courtesy-Car-During-Rep. ) yes)))


(RuleScoring "Transport Home After Accident Scoring"

        0
        (ScoringRule 100 (= (val Transport-Home-After-Accident ) yes)))


(RuleScoring "Free EU Car Hire Scoring"

        0
        (ScoringRule 100 (= (val Free-EU-Car-Hire-During-Repair-up-to-
```

10-days ) yes)))

(RuleScoring "Three Year Guaranteed Repairs Scoring"

0
(ScoringRule 100 (= (val Three-Year-Guaranteed-Repairs ) yes)))

The rules represent the algorithms which are used to evaluate the item property support, respectively to calculate the evaluation value which is the grade information. Herein "0" is the value that is applied when the scoring rule is not fulfilled.

(ScoringRule 100 (= (val Three-Year-Guaranteed-Repairs ) yes) means that a support of the item property "Three-Year-Guaranteed-Repairs" returns an evaluation value of 100. To obtain a finer grading, the information whether an item supports an item property need be more detailed than just "yes" or "no". Her the conditions bound to the support infromation are used. As condition not only a financial limit, price, age limit etc. is usable but also support information which gives details on the item. E.g. technical data can be used for technical items. Supposing a selection of computers as item and the item property being a hard disk, for each item not only the information whether a hard disk is present is of importance but mainly the access time, capacity, error rate, noise etc. . Then, the condition "capacity" can for example be used to provide a fine-grading. The bigger the capacity the better the grade. If a item property has several grading sources like the disk capacity and the access time and the noise, ... a multilevel fine-grading can be used which determines a fine-grade for each condition type and calculates a total subgrade out of the fine-grades. Again the possibility exists to offer to a customer these condition types as subitem properties among which the customer can set his significance attributes such that a personalized preference-controlled manipulation is made possible.

For facilitating the use of data in the table and for reducing the amount of data while preserving or even rendering the information content accessable via the table, a structured item description language is proposed.

There are two main reasons why reasons why an electronic catalog can profit from a structured standard item description language (SSPDL):

The item descriptions should be available in the form of a standard language to describe item properties. This way, similar items are described in similar ways and the evaluation function and evaluation rules for terminal item properties can easily identify whether a item property is supported by a item, at what price, and under which conditions. The standard language proposed here is based on a controlled and well defined vocabulary (i.e. a terminology). This makes it possible to define metrics on conditions and, for example, describe that for the condition of an insurance "cover limit" the higher cover limit should be rated better.

The item descriptions should be allowed to use a more complex format than simple item-feature-value relations. That is, features of items should be able to be structured, i.e. contain complex values. This allows item desciption to be non-redundant and exact. It has be noted here that "item features" and "item properties" are not necessarily the same. Item properties is the information about items that is displayed in the catalog interface in a hierarchical form. They should be understandable by potential buyers and relevant to the current context. That is, item properties should relate directly to the needs of a particular buyer, and they should be something this buyer might want to use to base his or her buying decision on. Different buyers will have different interests and needs and will therefore want to see a different set and a different hierarchy of item properties. Thus, item property hierarchies should be configurable for each buyer to be personalized views into the catalog's item information space offered.

The mapping between the SSPDL features and the visible catalog item properties can be performed by specific mapping rules associated with each catalog item property. These mapping rules query the SSPDL item description to determine whether a item supports a item property, to which degree the item property is supported, at what price, and under which conditions.

Item features, instead, are used to describe items internally using the SSPDL. Item features could orient themselves for example, could use the physical structure of the item as the main structuring criteria for the SSPDL based item description. However, buyers will probably not only be interested in this physical aspect of the item, but more likely will be interested in functional and other item aspects which can be derived from the physical description of the item through associated rules and queries. Thus, instead of redundantly defining each item property for each item only a single (non-redundant) SSPDL-based item description is produced. Item properties are then defined as queries to the SSPDL description which is executed by an query interpreter which is able to run rules and can access the terminological data about the domain. The result of the query is the support information for that item property which includes the conditions under which the support information holds. Different item properties will access the same SSPDL item information and translate them into different support information for these item properties.

Supposed is that insurance items are described in an SSPDL format that is organized around the different "coverage's" these insurance items are offering. Thus, instead of describing the item properties directly the information for the ICE-Comp insurance that appeared in the previous examples might be coded in the following way:

```
(offer "Comp"
supplier = "Ice"
price = 650
package =
(package thirdPartyPackage
price = 0)
cover =
(cover -
activity = driving
event = "motor accident"
liableParty = insured
damagedObject = "car of insured"
damage = "undriveable"
support = "transport home of driver and passengers")

package = (package firePackage
price = 0)
package = (package theftPackage
price = 0)

package = (package breakdownPackage
price = 0)
package = (package legalAssistancePackage
price = 30)
package = (package EUcoverPackage
price = 35)

(package "thirdPartyPackage"
supplier = "Ice"
cover =
(cover -
activity = driving
event = "motor accident"
liableParty = insured
damagedObject = "third party object"
support = ("pay liability" -
maxPay = 5000000))
cover =
(cover -
activity = driving
event = "motor accident"
liableParty = insured
damagedObject = passenger
support = ("pay liability" -
maxPay = 5000000))
cover =
(cover -
activity = driving
event = "motor accident"
support = "24 hour help")
cover =
(cover -
activity = driving
event = "motor accident"
liableParty = insured
damagedObject = "car of insured"
support = "car pickup by approved repairer")
```

```
(package "firePackage"
supplier = "Ice"
cover =
(cover -
event = fire
damagedObject = "car of insured"
support = "replacement")
cover =
(cover -
event = fire
damagedObject = ("car of insured" -
maxAgeYears = 1)
support = "replacement with new")
cover =
(cover -
event = fire
damagedObject = "car stereo of insured"
support = ("replacement" -
maxCost = 400))
```

This description now is rich enough do deduce various kinds of item property support information. For example an interesting item property could be the minimal limit on any cover that comes with the insurance, or for a certain evaluation context it might be interesting to evaluate what kind of support for incidents abroad are offered by the insurance. Other buyers might not at all be interested in the issue of protection abroad and do not want to use this for evaluating items. As the hierarchy and the content of item properties is independent from the concrete SSPDL-based descriptions, the evaluation hierarchy defined by the item properties can be configured for each buyer (or buyer group respectively) to fit the individual needs.

Thus the process would be the following

1. Providing a description of items in SSPDL. This could be partially automated to convert existing supplier information to a given SSPDL format.

2. Definition of item properties and of how they are deduced trough rule-based queries from the SSPDL. This can be achieved by using a conversion table.

3. Definition of buyer classes and identification of item properties interesting to each class.

4. Querying user profile information and user- input classification. Configuration of the total item property evaluation hierarchy.

5. Presenting the catalog that presents the items and item properties according to the user's personal interests and needs.

6. The user can modify the evaluation function.

The method can be automated in that the selection is displayed by an according mechanism in form of a table which contains the item properties and for each of the items and for each of the item properties contains item property support information which contains a grade to which the item supports an item property. The grade tells if and/or under which condition the item has an item property. As display means a computer display, TV screen or any other diplay medium can be used.

Then as input at least one preference attribute which is assigned to at least one selected item property of the displayed item properties can be received. This operation can be performed via an input device which delivers the assignment information to the medium which will calulate the grade information.

Subsequently, the table is redisplayed under use of the preference attribute. This means that in the redisplayed table for items differing in their grade for the selected item property a respective different grade information is reflected.

The assignment may lead to an alteration of weights in the determination of the grade and even in the determination of the grade of an eventual superordinated item property or the item itself. Exemplarily, if the item has four item properties, and per default all of them have a weight of 1/4, and a grade 1 leads to an evaluation value of 100, then the maximum evaluation score of each item property which is contributing to the score of the superordinated item property is 25. Selecting one of these item properties by assigning a preference attribute, leads to an increased weight of 0.4 while the other item properties get a decrease to 0.2. The total weight is again 1.0 However a grade 1 of the selected item property results in an evaluation score of 40. The influence of this selected item property has increased.

A calculating means can be used for performing the grade calculation.

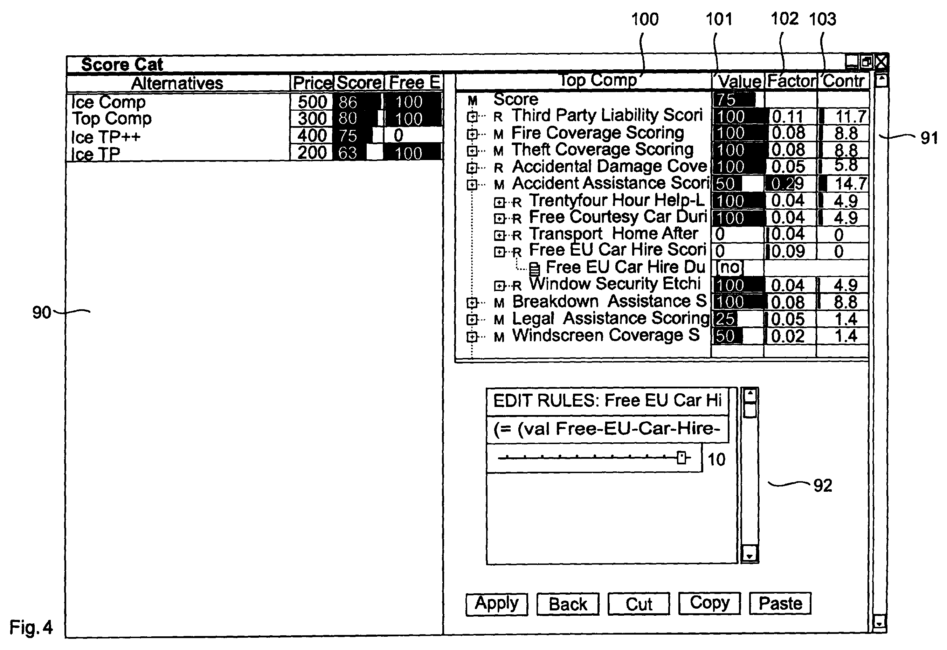

In figure 4, the arrangement of figure 3 is shown with the following alterations:

The item property "Free EU car hire scoring" has been selected with a mouseclick. Hence in the left table 90, in the fourth column the scores of this selected item property are shown for all items. The item "Top Comp" has also been selected such that the right table 91 shows the item property tree for this item. As can be seen, the factors or weights have values below 1, while the evaluation values, denoted with "Value", have values between 0 and 100. The contribution values "Contrib" are the multiplication product of these two columns. The item property "Accident Assistance Scoring" which is superordinated to the items "Twentyfour hour help-line scoring", "Free courtesy car during repair scoring", "Transport home after Accident Scoring", "Free EU Car Hire scoring" and "Three-Year Guarantueed Repair scoring" has a factor which is the sum of all factors of its subordinated subitem properties and hence a contribution value which is the sum of all contribution values of the subordinated item properties. This levelwise addition of the contribution values continues tree-upwards up to the top which is the total score or match or overall grade or performance. The score of 75 is hence the sum of the contribution values of all top-level item properties.

In the control table 92, the edit rule for the selected item property "Free EU Car Hire Scoring" is displayed. Therein on one hand the rule for determning the evaluation value can be amended and on the other hand, the weight can be changed via the ruler whose scale goes here from 0 to 10 which is then mapped into a weight from 0 to 1. Alternatively or even simultaneously to the increase of a weight, the weight of other item properties of the same level can be decreased. A normalization is here used such that the weights of all top-level item properties together have a sum of 1.

The invention hence provides a tool for assisting the choice of a product out of a preselected set of products by offering a potential customer the possibility to introduce his personal preferences such that the items with their properties are displayed under use of these preferences. The items thereby are displayed with a grade information that tells in which way the items satisfy the potential cutomer's preferences. A particular featrure is the alteration of influence of selected item properties on the total grade information by altering their weight with which they are entering a calculation process for determining this total grade. The calculation process can be used to determine the grade information upwards a tree of item properties in which some item properties are subordinated under other item properties. With every level the grade information propagates upwards along the tree, the grades of the other item properties can be used to determine the grade on this level. In the shown examples this becomes apparent in that the background shading becomes lighter the higher the level is. This method follows the supposed principle that item properties of a common level have the same significance, while item properties with a higher level have a higher significance. The potential customer has even the possibility to rearrange the item property tree in that he manages the positions where the item properties are situated in the tree. Thereby he can customize on one hand the spatial arrangement and on the other hand the significance levels of the various item properties.

**Claims**

1. Method for displaying a selection of items, preferrably for assisting the choice of at least one item out of said selection of said items, said selection being displayed in form of a table which contains item properties and for each of said items and for each of said item properties contains item property support information which contains a grade to which said item supports said item property (21-32), which grade is if and/or under which condition said item has said item property (21-32), whereby at least one significance attribute (70-72) is assignable to at least one selected item property (243, 262, 32) of said displayed item properties and whereby subsequently said table is redisplayed under use of said significance attribute (70-72), characterized in that said significance attribute (70-72) is a preference attribute which means that in said redisplayed table for said items differing in said grade for said selected item property (243, 262, 32) a respective different grade information is reflected, preferrably in form of a different background color and/or brightness and/or pattern and/or a different font property, such as font size and/or line width.

2. Method according to claim 1, characterized in that in the case of several preference attributes, in said redisplayed table for said items differing in the total of said grades for said selected item properties said respective different grade information for said total is reflected, preferrably in form of a different background color and/or brightness and/or pattern and/or a different font property, such as font size and/or line width.

3. Method according to claim 1 or 2, characterized in that at least one of the item properties is subdivideable into further item properties and that in the table for each of said items and for each of said further item properties (211, 212, 241-245, 261, 262), said item property support information is displayable, preferrably said further item properties (211, 212, 241-245, 261, 262) with said item property support information being displayable in the table, upon an item property subdivision request, preferrably arriving as an input via an input device.

4. Method according to claim 2, characterized in that in the case of different further item properties (211, 212, 241-245, 261, 262) of the same item property (21-32) having different grades and/or identical grades with different conditions, and at least when said further item properties (211, 212, 241-245, 261, 262) are not displayed in the table, said different grades and/or conditions are displayed as part of the item property support information for said same item property (21-32), preferrably in a common table field with a separating graphical element in between.

5. Method according to one of claims 1 to 4, characterized in that the grade information is reflected in the table for each item in a field assigned to said item and/or in a field assigned to the selected item property (243, 262, 32) for which said grade is if and/or under which condition said item has said item property (21-32).

6. Method according to one of claims 1 to 5, characterized in that at least one item is deselectable from the displayed selection, preferrably via a deselection request, preferrably arriving as an input via an input device.

7. Method according to one of claims 1 to 6, characterized in that at least one of several of said significance attributes (70-72) is an exclusion attribute which means that in said redisplayed table said item, whose grade for said selected item property (243, 262, 32) to which said exclusion attribute is assigned is equal to that said item does not support said selected item property (243, 262, 32), is not displayed.

8. Method according to one of claims 1 to 7, characterized in that the significance attribute (70-72) is revokable such that subsequently the table is redisplayed without use of said significance attribute (70-72).

9. Method according to one of claims 1 to 8, characterized in that the item properties (21-32) are derived from item descriptions which are provided in a common format containing at least a name for each item, said item properties (21-32), and eventually said conditions.

10. Method according to one of claims 1 to 9, characterized in that the grade is determined using a multiplication of a weight factor of the selected item property (243, 262, 32) with an evaluation value which value is dependent on whether the item has said selected item property (243, 262, 32) or not, said weight factor being preferrably altered upon assignment of the significance attribute (70-72) and that preferrably the other item properties have also weight factors and that a multiplication of said weight factors of the other item properties with evaluation values, which values are dependent on whether said item has said other item properties or not, is performed and that the sum of all multiplication results for one item is determined as said grade.

11. Method according to one of claims 1 to 10, being carried out by means of technical means, such as a computer program.

12. Machine-readable medium comprising stored thereon a computer program for carrying out a method according to one of claims 1 to 11.

13. Method for displaying a selection of items, preferrably for assisting the choice of at least one item out of said selection of said items, which comprises the following steps:

- displaying said selection in form of a table which contains item properties (21-32) and for each of said items and for each of said item properties (21-32) contains item property support information which contains a grade to which said item supports said item property (21-32), which grade tells if and/or under which condition said item has said item property (21-32),

- receiving as input at least one significance attribute (70-72) which is assigned to at least one selected item property (243, 262, 32) of said displayed item properties (21-32),

- redisplaying subsequently said table under use of said significance attribute (70-72), characterized in that

- said significance attribute (70-72) is a preference attribute which means that in said redisplayed table for said items differing in said grade for said selected item property (243, 262, 32) a respective different grade information is reflected, preferrably in form of a different background color and/or brightness and/or pattern and/or a different font property, such as font size and/or line width.

**14.** Method according to claim 13, wherein the item properties (21-32) with information to which items they belong are stored, preferrably in storage means.

**15.** Method according to claim 13 or 14, characterized in that the grade of an item property (21-32) which is subdividable into further item properties (211, 212, 241-245, 261, 262) is determined by a calculation step which incorporates evaluation values corresponding to the grade information of the further properties (211, 212, 241-245, 261, 262) and weight factors which determine which weight said further item properties (211, 212, 241-245, 261, 262) have in the grade of said superordinated item property (21-32).

**16.** Method according to claim 15, characterized in that during the calculation step the evaluation value is multiplied by the weight factor to determine a contribution value of a further item property (21-32) to the total grade of its superordinated item property (21-32).

**17.** Method according to claim 16, characterized in that in the case when several items support an item property (21-32) under a condition which is of the same type, the evaluation value is determined along a preference scale which is set along a determined direction, preferrably along the preferred direction of a choosing person.

**18.** Method according to claim 17, characterized in that the direction is set automatically, preferrably using stored information which defines said direction.

**19.** Means for displaying a selection of items, preferrably for assisting the choice of at least one item out of said selection of said items, which comprises:

- display means for displaying said selection in form of a table which contains item properties (21-32) and for each of said items and for each of said item properties (21-32) contains item property support information which contains a grade to which said item supports said item property (21-32), which grade tells if and/or under which condition said item has said item property (21-32), and for redisplaying subsequently to a received input said table under use of a significance attribute (70-72),

- input means for receiving as input at least one significance attribute (70-72) which is assigned to at least one selected item property (243, 262, 32) of said displayed item properties (21-32), whereby said significance attribute (70-72) is a preference attribute

- receiving as input at least one significance attribute (70-72) which is assigned to at least one selected insurance product property (243, 262, 32) of said displayed insurance product properties (21-32),

- redisplaying subsequently said table under use of said significance attribute (70-72),
  characterized in that

- said significance attribute (70-72) is a preference attribute which means that in said redisplayed table for said insurance products differing in said grade for said selected insurance product property (243, 262, 32) a respective different grade information is reflected, preferrably in a visual form, such as different background color and/or brightness and/or pattern and/or a different font property, such as font size and/or line width.

EP 0 947 939 A2

**Fig. 1**

### Auto Quotations

| Feature | Const | Ice Comp | Ice TP++ | Ice TP | Top Comp |
|---|---|---|---|---|---|
| Price | | 500 | 300 | 200 | 400 |
| Match | | | | | |
| 3rd Party Liability | M | + | + | + | + |
| Fire Coverage | | + | + | - | + |
| Car Fire Damage Cove | | + | + | - | + |
| Audio Fire Damage Co | | + | + | - | + |
| Theft Coverage | | + | + | - | + |
| Accidental Damage Cover | | + | - | - | + |
| Accident Assistance | | +/35 | +/35 | +/35 | |
| 24 Hour Help Line | | + | + | + | + |
| Free Courtesy Car Duri | | + | + | + | + |
| Transport  Home After | S | + | + | + | |
| Free EU Car Hire Durin | | 35 | 35 | 35 | - |
| 3-Year Guaranteed Re | | + | + | + | + |
| Breakdown Assistance | | 30/35/- | 30/35/- | 30/35/- | 20/- |
| Legal Assistance | | 20/- | 20/- | 20/- | +/- |
| Windscreen Coverage | | +/- | +/- | - | +/- |
| Window Security Etching | | - | - | - | + |
| Claims Handling | | +/30/- | +/- | - | +/- |
| Discounts | | - | - | - | + |
| Payment Options | | - | - | - | +/24 |

| Set Constraint MUST | Set Constraint SHOULD | Sort |
|---|---|---|

EP 0 947 939 A2

**Auto Quotations**

| Feature | Const | Ice Comp | Ice TP++ | Ice TP | Top Comp |
|---|---|---|---|---|---|
| Price | | 500 | 300 | 200 | 400 |
| Match | | | | | |
| 3rd Party Liability | M | + | + | + | + |
| Fire Coverage | | + | + | – | + |
| Car Fire Damage Cove | | + | + | – | + |
| Audio Fire Damage Co | | + | + | – | + |
| Theft Coverage | | + | + | | + |
| Accidental Damage Cover | | + | – | – | + |
| Accident Assistance | | +/35 | +/35 | +/35 | + |
| 24 Hour Help Line | | + | + | + | + |
| Free Courtesy Car Duri | | + | + | + | + |
| Transport Home After | S | + | + | + | |
| Free EU Car Hire Duri | | 35 | 35 | 35 | – |
| 3-Year Guaranteed Re | | + | + | + | + |
| Breakdown Assistance | | 30/35/- | 30/35/- | 30/35/- | 20/- |
| Legal Assistance | | 20/- | 20/- | 20/- | |
| Damage Regain | | 20/- | 20/- | 20/- | + |
| Prosecution | S | 20 | 20 | 20 | |
| Windscreen Coverage | | +/- | +/- | – | +/- |
| Window Security Etching | | – | – | – | + |
| Claims Handling | | +/30/- | +/- | – | +/- |
| Discounts | | – | – | – | + |
| Payment Options | | – | – | – | +/24 |

| Set Constraint MUST | Set Constraint SHOULD | Sort |
|---|---|---|

Fig. 2

Fig. 3

**Score Cat**

| Alternatives | Price | Score |
|---|---|---|
| Ice Comp | 500 | 85 |
| Top Comp | 400 | 84 |
| Ice TP++ | 300 | 75 |
| Ice TP | 200 | 50 |

| Ice Comp | | Value | Factor | Contri |
|---|---|---|---|---|
| M | Score | 85 | | |
| ⊞ R | Third Party Liability Scoring | 100 | 0.16 | 16.1 |
| ⊞ M | Fire Coverage Scoring | 100 | 0.12 | 12.9 |
| ⊞ M | Theft Coverage Scoring | 100 | 0.12 | 12.9 |
| ⊞ R | Accidental Damage Coverag | 100 | 0.09 | 9.6 |
| ⊞ M | Accident Assistance Scoring | 100 | 0.09 | 9.6 |
| ⊞ M | Breakdown Assistance Scor | 100 | 0.09 | 9.6 |
| ⊞ M | Legal Assistance Scoring | 75 | 0.06 | 4.8 |
| ⊞ M | Windscreen Coverage Scor | 50 | 0.03 | 1.6 |
| ⊞ R | Window Security Etching Sco | 0 | 0.03 | 0 |
| ⊞ M | Claims Handling Scoring | 50 | 0.09 | 4.8 |
| ⊞ M | Discounts Scoring | 100 | 0.03 | 3.2 |
| ⊞ M | Payment Options Scoring | 0 | 0.03 | 0 |

100  101  102  103

91

90

**EDIT MIX Score**

Third Party Liability Scori — 5

Fire Coverage Scoring — 4

Theft Coverage Scoring — 4

cidental Damage Covera — 3

92

93  94  95  96

[ Apply ]  [ Back ]  [ Cut ]  [ Copy ]  [ Paste ]

EP 0 947 939 A2

Fig. 4